# EUROPÄISCHE PATENTSCHRIFT

(11) **EP 2 002 281 B1**
(45) Veröffentlichungstag und Bekanntmachung des Hinweises auf die Patenterteilung: **02.01.2013**
(21) Anmeldenummer: 07726347.3
(22) Anmeldetag: 12.02.2007
(51) Int. Cl.: G01S 17/08, G01C 3/08, G01C 15/00, G01S 7/481

(54) **VORRICHTUNG ZUR OPTISCHEN DISTANZMESSUNG**
DEVICE FOR OPTICALLY MEASURING DISTANCE
DISPOSITIF DE MESURE OPTIQUE DE DISTANCES

(30) Priorität: 23.03.2006 DE 102006013292
(43) Veröffentlichungstag der Anmeldung: 17.12.2008
(73) Patentinhaber: Robert Bosch GmbH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/EP2007/051325
(87) Internationale Veröffentlichungsnummer: WO 2007/107413

(56) Entgegenhaltungen:
- WO-A-2006/024566
- DE-A1- 10 051 302
- DE-A1- 10 130 763
- JP-A- 9 021 874
- US-A- 5 006 721
- US-A- 5 354 983
- US-A- 6 133 988
- US-A1- 2001 050 764

## Beschreibung

### Stand der Technik

### Offenbarung der Erfindung

Die Erfindung geht aus von einer Vorrichtung zur optischen Distanzmessung nach dem Oberbegriff des unabhängigen Anspruchs.

Optische Entfernungsmessgeräte als solche sind seit längerer Zeit bekannt und werden inzwischen auch kommerziell in hoher Stückzahl vertrieben. Diese Geräte senden einen modulierten Lichtstrahl aus, der auf die Oberfläche eines gewünschten Zielobjektes, dessen Abstand zum Gerät zu ermitteln ist, ausgerichtet wird. Das von dem angepeilten Zielobjekt reflektierte oder gestreute, rücklaufende Licht wird vom Gerät teilweise wieder detektiert und zur Ermittlung des gesuchten Abstandes verwendet.

Der Anwendungsbereich derartiger Entfernungsmessgeräte umfasst im Allgemeinen Entfernungen im Bereich von einigen wenigen Zentimetern bis zu mehreren hundert Metern.

In Abhängigkeit von den zu messenden Laufstrecken und der Rückstrahlfähigkeit des Zielobjektes ergeben sich unterschiedliche Anforderungen an die Lichtquelle, die Qualität des Mess-Strahls sowie an den Detektor.

Die aus dem Stand der Technik bekannten optischen Entfernungsmessgeräte lassen sich grundsätzlich entsprechend der Anordnung der im Gerät notwendigerweise vorhandenen Sende- bzw. Empfangskanäle in zwei Kategorien einteilen.

Zum einen gibt es Vorrichtungen, bei denen der Sendekanal in einem gewissen Abstand zu dem Empfangskanal angeordnet ist, sodass die jeweiligen optischen Achsen parallel zueinander, aber beabstandet voneinander verlaufen. Zum anderen gibt es monoaxiale Messvorrichtungen, bei denen der Empfangskanal koaxial zum Sendekanal verläuft.

Die erstgenannten biaxialen Mess-Systeme haben den Vorteil, dass es einer aufwendigen Strahlungsteilung zur Selektion des rücklaufenden Mess-Signals nicht bedarf, sodass beispielsweise auch ein optisches Übersprechen aus dem Sendekanal direkt in den Empfangskanal besser unterdrückt werden kann.

Andererseits besteht bei biaxialen Entfernüngsmessgeräten unter anderem der Nachteil, dass es im Bereich kurzer Messentfernungen aufgrund einer Parallaxe zu Detektionsproblemen kommen kann. Dabei wandert die Abbildung des Zielobjektes auf der Detektoroberfläche des Gerätes, die für große Zielentfernungen noch eindeutig auf dem Detektor liegt, mit kürzer werdender Messentfernung zunehmend von der optischen Achse des Empfangsastes weg und erfährt zudem eine deutliche Änderung des Strahlquerschnittes in der Detektorebene.

Dies bedingt, dass ohne weitere Maßnahmen am Gerät, im Nahbereich der Detektion, d. h. für einen kleinen Abstand zwischen Zielobjekt und Messgerät, das detektierte Mess-Signal gegen Null gehen kann.

Derartige Messgeräte können zwar für einen bestimmten Entfernungsbereich optimiert werden, dies bedeutet jedoch dann eine deutliche Einschränkung des dem Messgeräts eigentlich zugänglichen Messbereichs.

Aus der DE 10 130 763 A1 ist eine Vorrichtung zur optischen Distanzmessung über einen großen Messbereich bekannt, die eine Sendeinheit mit einer Lichtquelle zur Aussendung modulierter, optischer Strahlung auf ein Zielobjekt hin aufweist, wobei die in diesem Messgerät angeordnete Empfangseinheit mit einem optischen Detektor zum Empfang der vom Zielobjekt rücklaufenden optischen Strahlung auf einer zur optischen Achse der Sendeeinheit beabstandeten Empfangsachse liegt. Die aktive, lichtempfindliche Fläche des Detektors der Empfangseinheit der DE 10 130 763 A1 verjüngt sich in Richtung einer Strahlverschiebung für kleiner werdende Zielobjektabstände, die sich aufgrund einer Parallaxe der rücklaufenden Messstrahlung ergibt.

Aus der DE 10 051 302 A1 ist ein Laserentfernungsmessgerät für den Nah- und Fembereich mit einem speziellen Empfänger bekannt, der einen Sende- und einen Empfangskanal aufweist, wobei der Sendekanal aus einem Sendeobjektiv, in dessen Brennpunkt eine Laserlichtquelle angeordnet ist, besteht, und der Empfangskanal aus einem Empfangsobjektiv besteht, in dessen Brennebene sich eine Empfängeranordnung befindet. Die optischen Achsen des Sendeobjektives und des Empfangsobjektives verlaufen parallel zueinander mit einem endlichen Abstand. Die Empfängeranordnung des Laserentfernungsmessgerätes der DE 100 51 302 A1 ist eine Folodioden-Chipanordnung mit mindestens zwei aktiven Fotodiodenflächen, die auf einer Geraden angeordnet sind, die die optischen Achsen des Sende- und des Empfangobjektives dieser Vorrichtung schneidet.

Die WO 2006/024566 A1 offenbart eine biaxiale Vorrichtung zur optischen Distanzmessung, insbesondere eine solche Vorrichtung nach dem Phasenmessprinzip, mit zumindest eine Sendeeinheit zur Aussendung modulierter optischer Messstrahlung in Richtung auf ein Zielobjekt auf. Des Weiteren verfügt Vorrichtung der WO 2006/024566 A1 über eine Empfangseinheit zum Empfangen der vom Zielobjekt rücklaufenden optischen Strahlung. Durch Vergleich und Auswertung physikalischer Größen des gesendeten Messstrahls mit denen des Empfangenen Messstrahls, beispielsweise durch Auswertung der dem Messstrahl aufgeprägten Phasenverschiebung, kann auf die Distanz zwischen der Vorrichtung und dem Zielobjekt geschlossen werden. Um auch im Bereich kleiner Messdistanzen messen zu können, ist in dem Gerät der WO 2006/024566 A1 zusätzlich auch ein Triangulationssensor vorhanden. Der WO 2006/024566 A1 die Erkenntnis zugrunde, dass man auf ein Nahbereichselement bei einem Laserentfernungsmesser verzichten kann, wenn für den Nahbereich ein zusätzliches Triangulationsverfahren durchgeführt wird.

Die JP 09021874 A1 offenbart ein optische Entfemungsmessvorrichtung auf Infrarot-Basis für den Automobilbereich, bei dem IR-Licht (860nm), welches über die Vorrichtung ausgesendet wird und an einem beabstandeten Messobjekt, wie beispielsweise einem vorausfahrenden Fahrzeug, reflektiert wird, zum Teil wieder in die Vorrichtung zurückgelangt und über eine Empfangslinse mit großen Öffnungswinkel, die als Fresnellinse ausgestaltet ist, auf den Detektor der Vorrichtung gelenkt wird. Als Detektor verwendet die Vorrichtung der JP 09021874 A1 eine PIN-Diode. Auch eine Avalanche Diode wird in der JP 09021874 A1 als möglicher Detektor genannt. Die JP 09021874 A1 offenbart auch ein Nahbereichselement, um Licht, welches unter einem großen Winkel - d.h. aus kurzen Abständen - auf die Empfangslinse fällt, noch auf den Detektor zu leiten. Dieses Nahbereichselement der JP 09021874 A1 ist als von der Detektionsfläche getrennter, ebener oder konkaver (beispielsweise parabolischer oder hyperbolischer Oberfläche) metalischer Umlenkspiegel ausgebildet.

Aufgabe der vorliegenden Erfindung ist es, ausgehend vom Stand der Technik bei einer Vorrichtung zur optischen Distanzmessung zu gewährleisten, dass über einen möglichst großen Messbereich, ein möglichst konstantes Empfangssignal gemessen werden kann.

Diese Aufgabe wird gelöst mit einer erfindungsgemäßen Vorrichtung zur optischen Distanzmessung mit den Merkmalen des unabhängigen Anspruchs.

### Vorteile der Erfindung

Bei biaxialen optischen Entfernungsmesssystemen, die zumeist auf große Messentfernung hin justiert sind, findet zu kürzeren Messenrfernungen hin neben einem seitlichen Auswandern des rücklaufenden Messsignals in der Detektorehene auch eine Deforkussierung des Messstrahlenbündels statt. Diese führt zur einem vergrößerten Strahldurchmesser des Messsignals in der Detektionsebene. Dadurch ergibt sich eine Abnahme der Messsignalstärke pro Fläche, welche - je nach konstruktiver Ausgestaltung des Messgerätes - nur teilweise durch die höhere Messsignalstärke aufgrund der kürzeren Entfernung kompensiert wird.

Die erfindungsgemäße Vorrichtung zur optischen Distanzmessung weist eine Sendeeinheit mit einer Lichtquelle zur Aussendung optischer Strahlung, insbesondere modulierter optischer Messstrahlung, und eine zur optischen Achse dieser Sendeeinheit beabstandete Empfangseinheit mit zumindest einem optischen Detektor auf. Dabei wird die Form der lichtemptindlichen, aktiven Fläche des erfindungsgemäßen Detektors in vorteilhafter Weise so gewählt, dass auch im Nahbereich ein Signal ausreichende Signalstärke auf der Detektoroberfläche vorliegt.

Der Detektor der Empfangscinheit bzw. die lichtempfindliche Fläche dieses Detektors weist dazu ein optisches Nahbereichselement zur Detektion von Messstrahlung insbesondere aus dem Nahbereich auf, dessen optisch aktive Fläche sich senkrecht zur Richtung einer Strahlverschiehung für kleiner werdende Zielobjektabstände zumindest teilweise aufweitet.

Darüber hinaus ist die optisch aktive Fläche des Detektors in Richtung einer Strahlverschiebung für kleiner werdende Zielobjektabstände elongiert, d.h. die wirksame lichtempfindliche Fläche besitzt in Strahlverschiebungsrichtung eine größere Ausdehnung als in ihrer dazu senkrechten Orientierung. Auf diese Weise kann auch bei einem "Auswandem" des Messsignals aufgrund einer systemimmanenten Parallaxe sichergestellt werden, dass immer genug Messsignal auf die aktive Detektorfläche fällt, so dass ein gutes "Signal-zu-Rausch" Verhältnis bei einer Messung mit der erfindungsgemäßen Vorrichtung crzielt wird.

Gegenüber aus dem Stand der Technik bekannten Geräten zur optischen Distanzmessung hat die erfindungsgemäße Vorrichtung insbesondere den Vorteil, dass die von der optischen Strahlung zurückgelegte Wegstrecke nicht durch die Mittel zur Behebung des Parallaxenproblems beeinflusst wird, so dass diese keine negativen Auswirkungen auf die Entfernungsmessung nach sich zichen.

In einer vorteilhaften Ausführungsform besitzt der Detektor der Empfangseinheit der Vorrichtung ein Nahbereichselement, dessen optisch aktive Fläche sich in Richtung einer Strahlverschiebung für kleiner werdende Zielobjektabstände aufweitet. Dies führt dazu, dass der Effekt der Defokussierung, der sich für kurze Zielobjektabstände einstellt kompensiert werden kann. Diese Defokussierung, die zu einem vergrößerten Strahldurchmesser des Messsignals in der Detektionsebene führt, bedeutet normalerweise eine Abnahme der Messsignalstärke pro Fläche und damit ein geringeres deteklierbares Empfangssignal.

Indem in der erfindungsgemäßen Vorrichtung die liehtempfindliche Fläche des Detektors sich in Richtung einer Strahlverschiebung für kleiner werdende Zielobjektabstände vergrößert und diese Fläche sich insbesondere in zur Strahlverschiebungsrichtung lateraler Richtung aufweitet, wird mit zunehmender Strahlverschiebung und damit einhergehender Defokussierung die effektive Detektorfläche, mit der gemessen wird größer, so dass der Effekt der reduzierten flächendichte für das Messsignal, welcher sich bei kurzen Zielobjektabständen normalerweise ergibt, zumindest weitgehend kompensiert werden kann.

Da sich allein aufgrund des "Abstand-Quadrat-Gesetzes" die Messsignalstärke für kürzer werdende Zielobjektabstände deutlich erhöht, kann dieser Effekt je nach konstruktiver Ausgestaltung der Entfernungsmessvorrichtung, d.h. insbesondere auch in Abhängigkeit von der Brennweite der verwendeten Kollimationsoptik für den Detektor, schon ausreichend sein, um die Abnahme der Intensität des Messsignals aufgrund der auftretenden Defokussierung zu kompensieren.

Mit der erfindungsgemäßen Ausformung der lichteempfindlichen Fläche seines mindestens einen Detektors und insbesondere durch die erfindungsgemäße Formgebung des Nahbereichselementes für einen solchen Detektor gewährleistet die beanspruchte Vorrichtung zur optischen Distanzmessung somit in vorteilhafter Weise, dass über einen großein Messbereich, ein Empfangssignal hinreichender Stärke und insbesondere ein möglichst konstantes Empfangssignal gemessen werden kann.

Damit ist eine Erweiterung des für ein solches Messgerät zugänglichen Messbereichs auf einfache und zuverlässige Weise möglich.

Vorteilhafte Ausführungsformen und Weiterentwicklungen der erfindungsgemäßen Vorrichtung ergehen sich aus den in den Unteransprüchen aufgeführten Merkmalen.

Die lichtempfindliche Fläche des Detektors weist in vorteilhafter Weise eine Symmetrieachse auf, die in der gemeinsamen Ebene der optischen Achsen von Sendeeinheit und Empfangseinheit der Vorrichtung liegt. Dadurch, dass der vom Zielobjekt rücklaufende Messstrahl für einen kleiner werdenden Objektabstand lateral in der gemeinsamen Ebene der optischen Achsen von Sendeeinheit und Empfangseinheit auswandert, wird der Detektor in vorteilhafter Weise eine in dieser Richtung elongierte Form haben. Auf diese Weise wird der Abhängigkeit der Richtung des rücklaufenden Messsignals von der Entfernung des Messgeräts von einem Zielobjekt Rechung getragen. Vorteilhafterweise wird die Größe der lichtempfindlichen Flächen des Detektors der Empfangseinheit dabei so gewählt, dass noch genügend Signal, insbesondere auch im Nahbereich, auf die jeweilige Teilfläche des Detecktors fällt.

Dies ermöglicht darüber hinaus in vorteilhafter Weise auch der Abhängigkeit der Stärke des rücklaufenden Messsignals von der Entfernung des Messgeräts zum Zielobjekt Rechnung zu tragen.

Bei der Größe der Fläche des Detektors bzw. der Größe der lichtempfindlichen Flächen des Detektors sollte nur sichergestellt sein, dass die wirksame Fläche, d. h. die optisch aktive Fläche des Detektors, auf die Licht von weit entfernten Zielobjekten auftrifft, groß genug ist, um in diesem Fall möglichst das gesamte Signal zu detektieren, da weit entfernte Messobjekte zu einem relativ schwachen Detektionssignal führen. Dies ist ebenfalls eine Konsequenz aus dem Abstandsquadratgesetz, dem die detektierte Intensität unterliegt.

Die laterale Ausdehnung der optisch aktiven Fläche des Detektors sollte entsprechend so groß sein, dass noch genügend Licht aus dem unmittelbaren Nahbereich der Detektion auf die jeweils aktive Detektionsfläche gelangt.

Ein weiterer Vorteil der beanspruchten Vorrichtung ist der, dass die elektrischkapazitiven Eigenschaften des Detektors des Messgerätes aufgrund der erfindungsgemäßen Form der optisch aktiven Detektionsfläche positiv beeinflusst werden. Eine zu große aktive Detektoroberfläche würde die elektrische Kapazität des Detektors erhöhen, sodass die zeitliche Ansprechcharakteristik, bzw. äquivalent dazu der Frequenzgang des Mess-Systems nicht mehr den benötigten Erfordernissen der Zeit- bzw. Frequenzauflösung des Messsystems entsprechen würde.

Eine einfache und preiswerte Ausgestaltung einer erfindungsgemäßen Vorrichtung mit der beanspruchten Detektionsfläche ergibt sich, wenn die optisch wirksame, d.h. lichtempfindliche Detektionsfläche durch teilweise Abdeckung einer ursprünglich größeren Detektorfläche ausgebildet wird. Dazu kann beispielsweise ein großer Flächendetektor eine lichtundurchlässige Schicht, beispielsweise eine Lackierung oder Deaktivierung in denjenigen Bereichen erhalten, die zur Detektion nicht genutzt werden sollen, so dass lediglich die beanspruchte Form als wirksame, aktive Detektorfläche genutzt werden kann. Die lichtundurchlässigen Bereiche lassen sich je nach verwendeter Wellenlänge des Messsignals und entsprechend gewähltem Detektor beispielsweise durch Aufdampfen oder Lackieren einer Schicht auf der Detektoroberfläche erzeugen. Auch mit einer einfachen mechanischen Maske oder Blende ließe sich in einfacher Weise die beanspruchte Form für die aktive Fläche des Detektors realisieren.

In vorteilhafter Weise lässt sich die erfindungsgemäße Vorrichtung zur optischen Distanzmessung durch die Verwendung eines Lasers, insbesondere einer Laserdiode als Lichtquelle realisieren. Laser und im speziellen Laserdioden sind über den gesamten sichtbaren Spektralbereich der elektromagnetischen Wellen mittlerweile kostengünstig erhältlich. Im Besonderen eignen sich Laserdioden wegen ihrer kompakten Größe und auch verhältnismäßig hohen Ausgangsleistungen für die Verwendung in Vorrichtungen zur optischen Distanzmessung, insbesondere in derartigen handgehaltenen Vorrichtungen.

Die erfindungsgemäße Vorrichtung zur optischen Distanzmessung ermöglicht somit ein möglichst konstantes Empfangs- bzw. Detektionssignal über einen großen Messbereich von Entfernungen zwischen der Vorrichtung und einem Zielobjekt.

Weitere Vorteile der erfindungsgemäßen Vorrichtung sind der nachfolgenden Zeichnung sowie der zughörigen Beschreibung einiger Ausführungsbeispiel der Detektorfläche für eine erfindungsgemäße Vorrichtung angegeben.

### Zeichnung

In der Zeichnung sind Ausführungsbeispiele der erfindungsgemäßen Vorrichtung dargestellt. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

Es zeigen:
- Figur 1: eine schematisierte Ansicht auf ein Ausführungsbeispiel einer erfindungsgemäßen Vorrichtung zur optischen Distanzmessung,
- Figur 2: eine schematische Darstellung der Variation des Messstrahlenbündels in der Detektionsebene bei Variation des Messobjektabstandes,
- Figur 3: eine Aufsicht auf die Detektoroberfläche einer erfindungsgemäßen Vorrichtung,
- Figur 4: eine Aufsicht auf eine alternative Ausführungsform eines Detektors für eine erfmdungsgemäßen Vorrichtung in schematischer Darstellung,
- Figur 5: eine weitere Ausführungsform für die lichtempfindliche Fläche des Detektors einer erfindungsgemäßen Vorrichtung, in schematischer Darstellung,
- Figur 6: eine weitere Ausführungsform für die lichtempfindliche Fläche des Detektors einer erfindungsgemäßen Vorrichtung, in schematischer Darstellung,
- Figur 9: eine Darstellung einer Detektoroberfläche zur Erläuterung der Ausbildung der lichtempfindlichen Fläche des Detektors in einer vereinfachten, schematischen Darstellung,

### Beschreibung der Ausführungsbeispiele

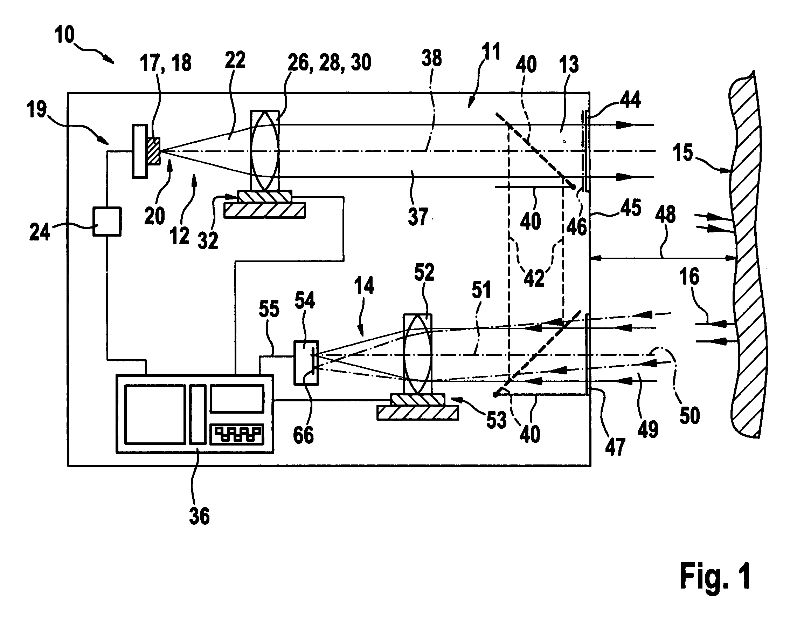

In Figur 1 ist in schematisierter Weise eine erfindungsgemäße Vorrichtung zur optischen Distanzmessung mit den wichtigsten Komponenten zur Beschreibung ihrer Funktion dargestellt. Das erfindungsgemäße Gerät 10 weist ein Gehäuse 11 auf, in dem eine Sendeeinrichtung 12 zur Erzengung eines Mess-Signals 13 sowie eine Empfangseinrichtung 14 zur Detektion des von einem Zielobjekt 15 rücklaufenden Mess-Signals 16 angeordnet sind.

Die Sendeeinrichtung 12 beinhaltet eine Lichtquelle 17, die im Ausführungsbeispiel der Figur 1 durch eine Halbleiter-Laserdiode 18 realisiert ist. Die Verwendung anderer Lichtquellen in der erfindungsgemäßen Vorrichtung ist aber ebenso möglich. Die Laserdiode 18 sendet einen Laserstrahl 20 in Form eines für das menschliche Auge sichtbaren Lichtbündels 22 aus.

Die Laserdiode 18 wird dazu über ein Steuergerät 24 betrieben, das durch eine entsprechende Elektronik eine Modulation des elektrischen Eingangssignals 19 der Diode 18 er zeugt. Durch eine derartige Modulation des Diodenstroms lässt sich erreichen, dass das optische Messsignal 13, welches zur Entfernungsmessung genutzt wird, ebenfalls in gewünschter Weise moduliert wird.

Das Laserstrahlbündel 20 durchläuft anschließend eine Kollimationsoptik 26 in Form eines Objektivs 28, das in der Figur 1 in vereinfachter Weise in Form einer einzelnen Linse 30 dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken ermöglicht.

Alternativ kann die Kollimationsoptik 26 jedoch auch bereits Bestandteil der Laserdiode 18 sein bzw. fest mit dieser verbunden sein.

Nach Durchlaufen des Objektivs 28 ergibt ein beispielsweise amplitudenmoduliertes Signal 13 in Form eines parallelen Lichtbündels 37, das sich entlang der optischen Achse 38 der Sendeeinheit 12 ausbreitet, wie es in Figur 1 schematisch dargestellt ist. Im Sendeast 12 der erfindungsgemäßen Vorrichtung befindet sich zudem noch eine vorzugsweise schaltbare Strahlumlenkung 40, die es gestattet, das Mess-Signal 13 unter Umgehung eines Zielobjekts direkt, d. h. geräteintern auf die Empfangseinheit 14 des Gerätes 10 umzulenken. Auf diese Weise wird eine geräteinterne Referenzstrecke 42 erzeugt, die eine Kalibrierung bzw. einen Abgleich des Mess-Systems gestattet.

Wird mit der erfindungsgemäßen Vorrichtung eine Distanzmessung durchgeführt, verlässt der Mess-Strahl 13 das Gehäuse 11 der erfindungsgemäßen Vorrichtung durch ein optisches Fenster 44 in der Stirnwand 45 des Gerätes 10. Die Öffnung des optischen Fensters kann beispielsweise durch einen Shutter 46 gesichert sein. Zur eigentlichen Messung wird das Messgerät 10 sodann auf ein Zielobjekt 15 ausgerichtet, dessen Entfernung 48 zum Messgerät ermittelt werden soll. Das an dem gewünschten Zielobjekt 15 reflektierte oder auch gestreute Signal 16 bildet ein rücklaufendes Strahlenbündel 49 bzw. 50, das zu einem gewissen Teil wieder in das Messgerät 10 zurückgelangt.

Durch ein Eintrittsfenster 47 an der Stirnseite 45 des Geräts 10 wird die rücklaufenden Mess-Strahlung 16 in das Messgerät eingekoppelt und im Ausführungsbeispiel der Figur 1 auf eine Empfangsoptik 52 gelenkt.

In Figur 1 sind exemplarisch zur Verdeutlichung zwei rücklaufende Mess-Strahlenbündel 49 bzw. 50 für zwei unterschiedliche Zielobjektabstände 48 eingezeichnet. Für große Objektabstände und groß heißt in diesem Fall groß gegenüber der Brennweite der Empfangsoptik 52, fällt das vom Zielobjekt rücklaufende Signal 16 parallel zur optischen Achse 51 der Empfangseinrichtung 14 ein. Dieser Fall ist im Ausführungsbeispiel der Figur 1 durch das Mess-Strahlenbündel 49 repräsentiert. Mit kleiner werdendem Objektabstand wird das in das Messgerät einfallende rücklaufende Signal 16 aufgrund einer Parallaxe immer mehr gegenüber der Achse 51 der Empfangseinheit 14 geneigt. Als Beispiel für ein solches rücklaufendes Mess-Strahlenbündel im Nahbereich der Entfemungsmessvorrichtung ist in Figur 1 das Strahlenbündel 50 eingezeichnet.

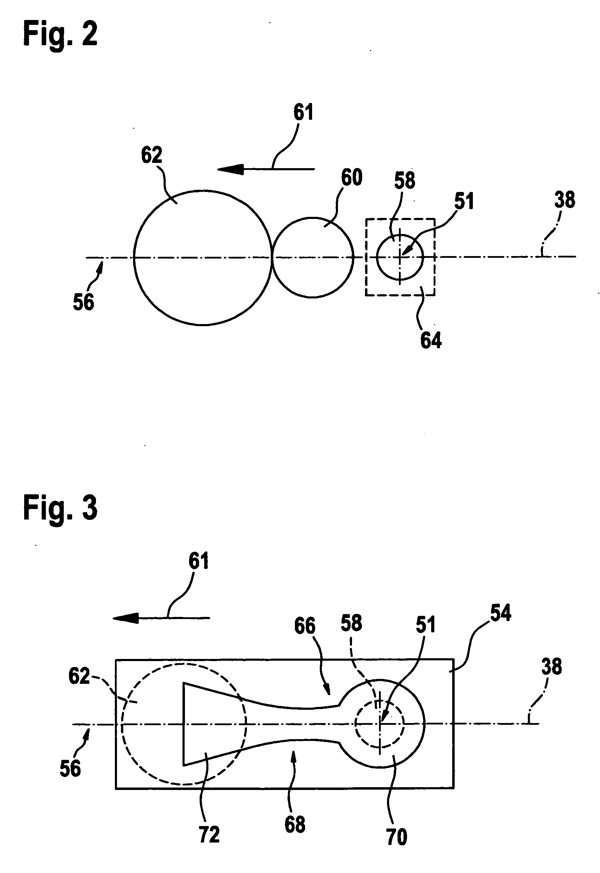

Die Empfangsoptik 52, die im Ausführungsbeispiel der Figur 1 ebenfalls nur schematisch, durch eine einzelne Linse symbolisiert ist, kollimiert das rücklaufende Mess-Signal 16 und fokussiert dessen Strahlenbündel auf die lichtempfindliche Oberfläche 66 eines Empfangsdetektors 54. Der Detektor 54 weist zur Detektion der optischen Messstrahlung beispielsweise zumindest eine Photodiode, beispielsweise eine PIN-Diode oder eine APD (Avalanche Photo Diode) oder aber auch zumindest einen CCD-Chip als lichtempfindliches Element 66 auf. Darüber hinaus sind natürlich auch andere, dem Fachmann bekannte Flächendetektoren als Empfangsdetektor möglich. Der Flächendetektor ist in der Regel mit seinen aktiven lichtempfindlichen Oberflächen 66 senkrecht auf die optische Achse des Empfangsastes ausgerichtet. Das einfallende optische Signal wird durch den Empfangsdetektor 54 in ein elektrisches Signal 55 umgewandelt und der weiteren Auswertung in einer Auswerteeinheit 36 der erfindungsgemäßen Vorrichtung zugeführt. Die genaue Ausgestaltung der Form der lichtempfindlichen Fläche 66 des Detektors wird im Zusammenhang mit den Abbildungen 3 bis 9 noch näher erläutert werden.

Die Empfangsoptik 52, die im Ausführungsbeispiel der Figur 1 nicht einschränkend ebenfalls auf einer Verstellmimik 53 angebracht ist, befindet sich ungefähr im Abstand ihrer Brennweite von der aktiven Oberfläche 66 des Detektors entfernt, sodass einfallende Strahlung, die von einem Zielobjekt kommt, welches weit entfernt vom Messgerät liegt, im wesentlichen auf den Detektor bzw. auf dessen lichtempfindliche Fläche fokussiert wird.

Bei kleinen Abständen zum Zielobjekt ist jedoch zu beobachten, dass die Abbildungsposition für den am Zielobjekt reflektierten oder gestreuten Messfleck sich zunehmend vom Fokus der Empfangslinse entfernt. So wandert der rücklaufende Messstrahl mit kleiner werdendem Abstand des Zielobjektes zum Messgerät immer weiter von der optischen Achse der Empfangseinrichtung weg und weicht somit auch immer mehr von der optischen Achse der Sendeeinrichtung ab. Zudem wird das rücklaufende Mess-StrahlenBündel aufgrund der geänderten Abbildungsverhältnisse am Empfangsobjektiv nicht mehr genau auf die Detektoroberfläche fokussiert. Mit kürzer werdendem Zielobjektabstand ergibt sich ein immer größer werdender Messfleck auf der Detektoroberfläche.

Auf weitere, im Messgerät vorhandene Komponenten, die aber für das Verständnis der erfindungsgemäßen Vorrichtung nicht unbedingt notwendig sind, soll in diesem Zusammenhang nicht weiter eingegangen werden. Es sei nur angemerkt, dass das Messgerät natürlich auch über einen Steuer- und Auswerteeinheit 36 verfügt.

Die Zusammenhänge zwischen dem Abstand eines Zielobjektes vom Messgerät und der Position bzw. der Größe des Messflecks in der Detektionsebene und somit auch auf der Detektoroberfläche sind zur Übersicht in schematischer Weise in Figur 2 dargestellt. Figur 2 zeigt dabei eine Aufsicht auf eine Detektoroberfläche 64 nach dem Stand der Technik in Blickrichtung des vom Messobjekt rücklaufenden Mess-Signals 16. Mit dem Bezugszeichen 56 versehen ist die gemeinsame Ebene der optischen Achse 38 der Sendeeinheit 12 mit der optischen Achse 51 der Empfangseinheit 14. Der Messfleck 58 der rücklaufenden Strahlung 16 für sehr große Objektabstände liegt zentriert auf der optischen Achse 51 der Empfangseinheit 14 und wird auf der Oberfläche 64 des Detektors zu einem kleinen Fleck fokussiert. Da der Detektor 54 in etwa in Abstand der Brennweite der Empfangsoptik 52 steht, wird Licht, das optisch gesehen aus dem Unendlichen kommen, aufgrund der optischen Abbildungsgesetze direkt auf die Detektoroberfläche fokussiert. In Figur 2 ist zu Verdeutlichung der Zusammenhänge eine "klassische" Detektorfläche 64 eines Detektors nach dem Stand der Technik gestrichelt eingezeichnet.

Mit abnehmender Distanz 48 des Messgerätes 10 zu einem Zielobjekt 15 fällt das rücklaufende Signal 16 zunehmend schräger auf das Empfangsobjektiv 52 ein, sodass auch der Messfleck auf der Detektoroberfläche in Richtung des Pfeils 61 in Figur 2 wandert. Der in Figur 2 ebenfalls eingezeichnete Messfleck 60 für einen kleinen Objektabstand 48 des Zielobjektes 15 vom Messgerät 10 ist bereits von der optischen Achse 51 der Empfangseinrichtung weg gewandert und in seiner Ausdehnung, insbesondere lateralen Ausdehnung deutlich vergrößert.

Bei sehr kleinem Messabstand 48 des Messobjektes 15 zum Messgerät ergibt sich in der Detektorebene ein Messfleck 62 des rücklaufenden Messsignals 16, der nochmals deut-lich vergrößert ist und zudem auch weiter entfernt von der optischen Achse 51 der Empfangseinheit 14 zu liegen kommt. Eine solche Verschiebung des zu detektierenden Messflecks in Abhängigkeit vom Abstand 48 eines Messobjektes 15 zum Messgerät 10 kann bei Geräten des Standes der Technik ggf. dazu führen, dass für sehr kleine Objektabstände, das rücklaufende Signal 16 nicht mehr auf die aktive Fläche 64 des Messempfängers 54 fällt. Dies ist in der Situation der Figur 2 beispielsweise für Messsignale der Fall, die in der Detektionsebene einen Messfleck 60 bzw. 62 erzeugen, da in diesem Fall das rücklaufende Messsignal nicht mehr auf die aktives Detektionsfläche fällt, wie dies durch die angedeutete, gestrichelt eingezeichnete Fläche 64 eines "klassischen" Messempfängers in Figur 2 angedeutet sein soll.
Um der Variation der Größe und Lage des Messflecks in der Detektionsebene der Empfangseinheit 14 Rechnung zu tragen, ist die aktive, lichtempfindliche Oberfläche 66 des erfindungsgemäßen Detektors 54 entsprechend gestaltet und soll nachfolgend in einer Reihe von nicht abschließend anzusehenden Ausführungsbeispielen beschrieben werden.

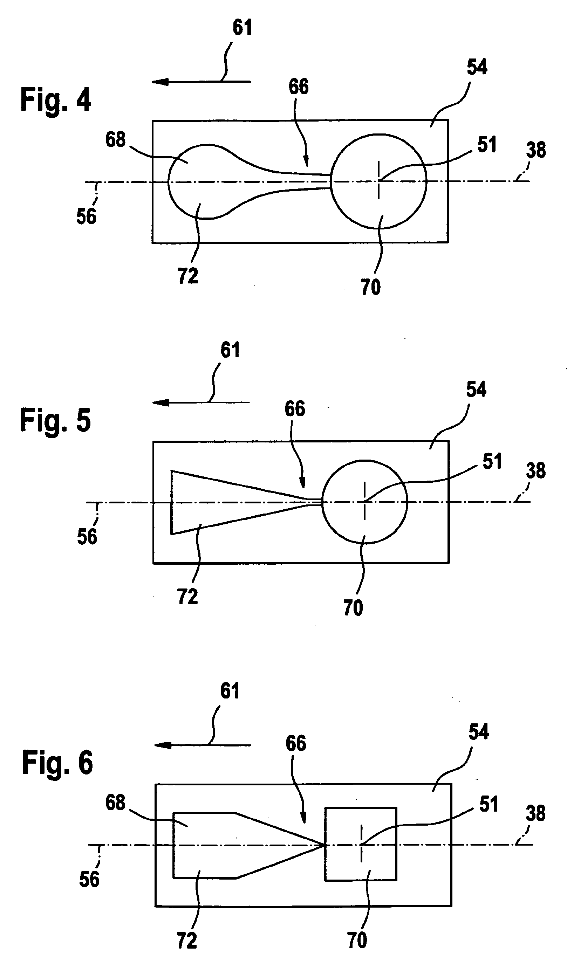

Figur 3 zeigt ein erstes Ausführungsbeispiel der lichtempfindlichen Oberfläche 66 eines Detektors einer erfindungsgemäßen Vorrichtung. Der Detektor 54 der Empfangseinheit 14, der in der Figur 3 und den noch zu erläuternden Figuren 4 bis 9 nur symbolisch als Rahmen dargestellt ist, weist in diesem Fall einen ersten Bereich 70 auf, dessen lichtempfindliche Fläche vorrangig der Detektion von Messsignalen dient, die von einem weit entfernt liegenden Messobjekt 24 rücklaufen. Dieser erste lichtempfindliche Bereich 70 ist derart ausgestaltet, dass Licht, welches von einem weit entfernten Zielobjekt zurück in das Messgerät gelangt und in die Detektionsebene abgebildet wird, möglichst vollständig auf den Detektor bzw. auf die lichtempfindliche Fläche 66 des Detektors 54 gelangt. Um dies zu verdeutlichen ist in Figur 3 nochmals der Messfleck 58 eines Messstrahlenbündels 49 für große Objektabstände eingezeichnet. Die aktive Fläche 70 weist daher in vorteilhafter Weise eine derartige laterale Ausdehnung in der Detektionsebene auf, dass diese sicherstellt, dass der Messfleck 58 der von einem solchen, weit entfernten Zielobjekt rücklaufenden Mess-Strahlung 16 bzw. 49 vollständig detektiert wird. Als laterale Richtung sei hierbei eine Richtung in der Detektionsebene senkrecht zur Messsignalrichtung verstanden. Daher sollte die Abmessung der lichtempfindlichen Flächen 70 im Wesentlichen gleich bzw. leicht größer als die Abmessungen eines Messflecks 58 für sehr große Objektabstände sein, wie dies in Figur 3 angedeutet ist. Der lichtempfindliche Bereich 70 kann dabei kreisförmig, wie in Figur 3 dargestellt, oder rechteckig oder in einer beliebigen anderen Form ausgebildet sein. Es sollte jedoch sichergestellt sein, dass möglichst viel Licht aus der großen Zielobjektentfernung auf die lichtempfindliche Fläche 70 gelangen kann.

Daneben besitzt der Detektor 54 nach der Ausführungsform der Figur 3 einen zweiten lichtempfindlichen Bereich 72, der das so genannte Nahbereichselement 68 der Detektionsfläche 66 bildet und der insbesondere der Aufnahme und Detektion von Messsignalanteilen bei kürzer werdenden Zielobjektabständen dient. Der zweite Bereich 72 der lichtempfindlichen Fläche weitet sich im Bereich der Auftreffpunkte für Messstrahlenbündel, die von einem nahe gelegenen Zielobjekt rücklaufen, auf, so dass das Nahbereichselement in diesem Bereich eine größere lichtempfindliche Fläche aufweist. Indem sich die lichtempfindliche Fläche des Detektors in Richtung senkrecht zur Strahlverschiebung für kleiner werdende Zielobjektabstände vergrößert und diese Fläche sich insbesondere in zur Strahlverschiebungsrichtung lateraler Richtung aufweitet, wird dem Effekt der Defokussierung des rücklaufenden Messstrahlenbündels in der Detektorebene Rechnung getragen. Die effektive Detektorfläche mit der gemessen wird, wird für kürzere Zielobjektabstände größer, so dass der Effekt der reduzierten Flächendichte für das Messsignal, welcher sich bei kurzen Zielobjektabständen normalerweise ergibt, zumindest weitgehend kompensiert werden kann.

Der zweite Bereich 72 bzw. das durch diesen Bereich gebildete Nahbereichselement 68 besitzt eine in Strahlverschiebungsrichtung 61 elongierte Form, d.h. die Ausdehnung der lichtempfindlichen Fläche 72 ist in dieser Richtung 61 größer als in einer dazu senkrechten Richtung.

Die lichtempfindlichen Teilbereiche 70 und 72 des Detektors 54 bilden zusammen die lichtempfindliche oder optisch aktive Fläche 66 des Detektors und können, wie es im Beispiel der Figur 3 angedeutet ist, zusammenhängend, als eine einzelne lichtempfindliche Fläche ausgebildet sein. Alternativerweise ist es auch möglich, die Teilbereich 70 und 72 der lichtempfindlichen Fläche 66 des Detektors 54 voneinander getrennt auszubilden und gegebenenfalls auch getrennt voneinander elektrisch anzusteuern, wobei die Teilbereichen in diesem Fall dann direkt aneinander grenzen, um eine kontinuierliche lichtempfindliche Fläche in Richtung des Strahlversatzes für einen kürzer werdenden Zielobjektabstand zu gewährleisten.

Wie bereits erwähnt, findet bei biaxialen Systemen, die in der Regel auf große Messentfernung hin justiert sind, bei kürzeren Messentfernungen neben einem seitlichen Auswandern des Messsignals in der Detektorebene auch eine Defokussierung statt. Diese führt zu einem vergrößerten Strahldurchmesser des Messsignals in der Detektionsebene, wie dies in Figur 2 dargestellt ist. Damit einher geht eine Abnahme der Messsignalstärke pro Fläche, welche - je nach konstruktiver Ausgestaltung des Messgerätes - nur teilweise durch die höhere Messsignalstärke aufgrund der kürzeren Entfernung zum Zielobjekt kompensiert wird.

Die reduzierte Leistungsflächendichte bzw. Intensität des Messsignals auf dem Detektor führt zu einem erhöhten "Signal-zu-Rausch" Verhältnis und begrenzt somit letztendlich den Verwendungsbereich eines derartigen Messsystems. Diesem Verhalten tragen die erfindungsgemäße Ausgestaltung der lichtempfindlichen Detektorfläche 66 und insbesondere die erfindungsgemäße Form des Nahbereichselementes 68 nach Figur 3 Rechnungen.

Für sehr große Objektabstände 48 zwischen dem Zielobjekt 15 und dem Messgerät 10 kommt der Messfleck 58 - wie bereits beschrieben - vollständig auf der lichtempfindlichen Teilfläche 70 zu liegen. Wandert nun der Messfleck mit abnehmendem Objektabstand 48 in Richtung des Pfeils 61 von der ursprüngliche Empfangsachse 51 aus, so vergrößert sich, wie in Figur 2 dargestellt, der Durchmesser bzw. die lateralen Ausdehnungen des Messflecks.

Bei kleinem Messabstand 48 eines Messobjekt 15 zum Messgerät 10, bei welchem der Messfleck in der Detektionsebene weiter in Richtung des Pfeils 61 in Figur 3 gewandert sein wird, vergrößert sich entsprechend auch die lichtempfindliche Fläche 72 des Nahbereichselements 68, so dass anteilig mehr Signal des sich ebenfalls vergrößernden Messsignalflecks 62 detektiert und ausgewertet werden kann. Auf diese Weise ist es möglich, das "Signal-zu-Rausch" Verhältnis auch für kurze Objektabstände deutlich zu verbessern, und somit den mit dem Messgerät zugänglichen Distanzbereich zu erweitern.

In den Figuren 4 bis 6 sind alternative Ausführungsformen für die lichtempfindliche Fläche 66 des Detektors 54 eines erfindungsgemäßen Entfernungsmessgerätes dargestellt. Der Übersicht halber werden die Messflecken 58 bzw. 62 in diese Darstellungen nicht mehr dargestellt

Allen drei Ausführungsformen der Figuren 4 bis 6 ist gemein, dass das Nahbereichselement 68 eine lichtempfindliche bzw. optisch aktive Fläche 72 besitzt, die sich in zur Richtung 61 einer Strahlverschiebung für kleiner werdende Zielobjektabstände 48 orthogonaler Richtung zumindest teilweise aufweitet. Diese Aufweitung kann beispielsweise linear, wie in Figur 5 angedeutet, oder aber auch überproportional, wie in Figur 4, ausgebildet sein. Auch ein Nahbereichselement mit einer lichtempfindlichen Fläche 72, wie sie in Figur 6 dargestellt ist, bei der sich die lichtempfindliche Fläche 72 erst aufweitet, um dann eine konstante laterale Ausdehnung in Richtung 61 der Strahlverschiebung für kleiner werdende Zielobjeklabstände zu behalten, sei im Rahmen der Erfindung als eine sich zumindest teilweise aufweitende lichtempfindliche Fläche verstanden.

Da die Detektorfläche selbstverständlich nur endlich groß sein kann und daher auch geschlossen sein muss, ergibt sich beispielsweise für das Nahbereichselement 68 gemäß Ausführurigsform der Figur 4 auch einen Bereich in dem sich die Fläche 72 nicht weiter aufweitet sondern sogar wieder zusammenschnürt, um eine Begrenzung der Detektorfläche herbeizuführen. Dieser in Figur 4 linke - Randhereich der lichtempfindlichen Fläche 72 dient einzig und allein der notwendigen Begrenzung der lichtempfindlichen Fläche des Nahbereichselementes und widerspricht nicht der prinzipiellen Aufweitung der Fläche nach dem Erfindungsgedanken, Dieser physikalischen Notwendigkeit der begrenzten Detektorfläche wird dadurch Rechnung getragen, dass im Rahmen des beanspruchten Gegenstandes davon die Rede ist, dass die Detektionsfläche des optischen Nahbereichselementes 68 in Richtung 61 einer Strahlverschiebung für kleiner werdende Zielobjektabstände 48 elongiert ist und sich in dazu orthogonaler Richtung zumindest. teilweise aufweitet oder eine im wesentlichen konstante Ausdchnung hat. Es könnte im Rahmen der Offenbarung auch davon die Rede sein, dass sich diese Fläche im wesentlichen aufweitet oder eine im wesentlichen konstante Ausdehnung hat. Der Gesamteindruck, dass die lichtempfindliche Fläche des optischen Nahbereichselements 68 als Ganzes eine entsprechende Aufweitung in zur Strahlverschichungsrichtung 61 orthogonaler Ausdehnung aufweist, bleibt von der nolwendigen Begrenzung der lichtempfindlichen Fläche unberührt. Gleiches gilt sinngemäß auch für etwaige Modulationen in den Begrenzungslinien der lichtempfindlichen Flächen.

Es gilt - je nach konstruktiver Ausgestaltung der Messvorrichtung - den Effekt des Abstandsquadratgesetztes einerseits, sowie den Effekt der mehr oder weniger schlechten Fokussierung anderseits, gegeneinander abzuwägen und die optimierte Form für die lichtempfindlichen Gesamtfläche 66, und insbesondere eine optimierte Form für die lichtempfindlichen Flächen 72 des Nahbereichselementes zu finden. So kann je nach konkreter konstruktiver Ausgestaltung des Messgerätes die eine oder die andere spezielle Form des Nahbereichselementes 68 von Vorteil sein.

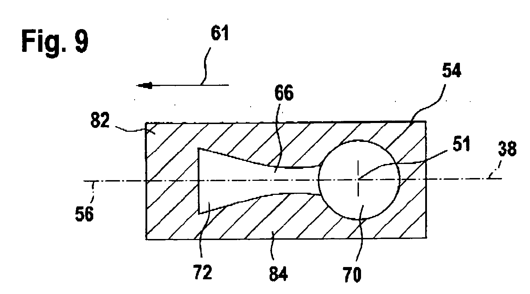

Figur 9 zeigt eine Möglichkeit zur Realisierung der einzelnen Ausführungsbeispiele des erfindungsgemäßen Detektors 54. Während in den Ausführungsbeispielen der Figuren 2 bis 8 die wirksame, d.h. lichtempfindliche Fläche 66 des Detektors 54 gleich der gesamten Detektorfläche ist, wird in dem Ausführungsbeispiel der Figur 9 die optisch aktive, d.h. lichtempfindliche Detektionsfläche 66 aus einer ursprünglich größeren Detektorfläche 82 abgeleitet. Dazu wird die optisch sensitive Fläche eines Halbleiterdetektors, der beispielsweise eine rechteckige Detektionsfläche aufweist, in gewissen Bereichen mit einer optisch undurchlässigen Schicht 84 überzogen, womit der Halbleiterdetektor in diesen beschichteten Bereichen deaktiviert ist, so dass nur noch eine nicht beschichtete Teilfläche 66 des Halbleiterdetektors als lichtempfindlich verbleibt. Dieser aktiven Teilfläche 66 lässt sich im Herstellungsverfahren jede gewünschte Form geben, darunter insbesondere auch die Formen, der in den Figuren 2 bis 9 aufgezeigten Detektorflächen 66. Zur Erzeugung dieser lichtundurchlässigen Schicht kann beispielsweise das Aufdampfen einer Metallschicht auf die gewünschten Stellen der ursprünglichen Detektionsfläche genutzt werden. Auch ließe sich mit einer einfachen mechanischen Maske oder Blende ließe sich in einfacher Weise die beanspruchte Form für die aktive Fläche des Detektors realisieren. Andere dem Fachmann bekannte optische Deaktivierungsmaßnahmen der Hallbeiteroberfläche können zu diesem Zweck natürlich ebenfalls benutzt werden, so dass an dieser Stelle nicht auf weitere Details einer möglichen Herstellung eingegangen zu werden braucht.

Allen Bauformen der aufgezeigten Ausführungsbeispiele ist gemein, dass sich die aktive, das heißt lichtempfindliche Fläche des Nahbereichselementes des erfindungsgemäßen Detektors in Richtung der Strahlverschiebung aufgrund der Parallaxe für kürzer werdende Zielobjektabstände nicht verjüngt. Die genaue Form der Änderung der Detektorfläche mit zunehmendem Abstand von der optischen Achse der Sendeeinrichtung hängt unter Anderem von dem gewünschten Messbereich ah, in dem das erfindungsgemäße Messgerät arbeiten soll. Auch die genaue Geometrie des Gerätes und die optischen Abbildungsverhältnisse im Empfangsast sind hierbei bei einer Optimierung der Größe und Form der lichtempfindlichen Bereiche zu berücksichtigen.

Die erfindungsgemäße Vorrichtung ist nicht auf die in der Beschreibung und den Figuren vorgestellten Ausführungsbeispiele begrenzt.

Insbesondere ist die erfindungsgemäße Vorrichtung nicht beschränkt auf die dargestellten Formen bzw. Anzahlen der einzelnen lichtempfindlichen Teilflächen des Detektors. Auch muss die Änderung der lateralen Ausdehnung der aktiven Detektorfläche nicht kontinuierlich erfolgen, sondern kann auch diskret, beispielsweise in einzelnen Stufen realisiert sein.

## Patentansprüche

1. Vorrichtung zur optischen Entfernungsmessung, insbesondere eine handgehaltene Vorrichtung, mit einer Sendeeinheit (12) mit einer Lichtquelle (17,18) zur Aussendung optischer Messstrahlung (13,20,22) auf ein Zielobjekt (15) hin, und mit einer zur optischen Achse (38) der Sendeeinheit (12) beabstandeten Empfangseinheit (14) mit zumindest einem optischen Detektor (54) mit einer Detektionsfläche (66) zum Empfang von vom Zielobjekt (15) rücklaufender optischer Strahlung (16,49,50), **dadurch gekennzeichnet, dass** die Detektionsfläche (66) des Detektors (54) ein optisches Nahbereichselement (68) aufweist, dessen optisch aktive Fläche (72,74) in Richtung (61) einer Strahlverschiebung für kleiner werdende Zielobjektabstände (48) elongiert ist und sich in dazu orthogonaler Richtung zumindest teilweise aufweitet.

2. Vorrichtung nach Anspruch 1, **dadurch gekennzeichnet, dass** die lichtempfindlichen Fläche (66,70,72,74) des Detektors (54) eine Symmetrieachse aufweist, die in der gemeinsamen Ebene (56) der optischen Achsen (38,51) von Sendeeinheit und Empfangseinheit liegt.

3. Vorrichtung nach Anspruch 1 oder 2, **dadurch gekennzeichnet, dass** die Ausdehnung der lichtempfindlichen Fläche (66,70,72,74) des Detektors (54) zumindest so groß ist, dass ein Messfleck (58) der rücklaufenden Strahlung (16,49) von einem Zielobjekt (15) mit großem Objektabstand vollständig detektiert wird.

4. Vorrichtung nach einem der vorhergehenden Ansprüche, **dadurch gekennzeichnet, dass** die Ausdehnung der lichtempfindlichen Fläche (66,70,72,74) des Detektors (54) in Richtung senkrecht zur optischen Achse (51) der Empfangseinheit (14) zumindest so groß ist, dass der von einem Zielobjekt (15) im Nahbereich rücklaufende Messstrahl (50) zumindest teilweise noch auf die lichtempfindliche Fläche (72,74) fällt.

5. Vorrichtung nach einem der vorhergehenden Ansprüche, **dadurch gekennzeichnet, dass** die aktive, lichtempfindliche Fläche (66,70,72,74) des Detektors (54) durch teilweise Abdeckung einer größeren, optisch sensitiven Detektorfläche (82) herausgebildet ist.

6. Vorrichtung nach Anspruch 5, **dadurch gekennzeichnet, dass** die aktive, lichtempfindliche Fläche (66,70,72,74) des Detektors (54) durch partielles Aufbringen einer optisch undurchsichtigen Schicht (84) auf die ursprünglich größere, optisch sensitive Detektorfläche (72) herausgebildet ist.

7. Vorrichtung nach einem der vorhergehenden Ansprüche, **dadurch gekennzeichnet, dass** die Lichtquelle (17,18) ein Laser, insbesondere eine Laserdiode (18) ist.

8. Vorrichtung nach einem der vorhergehenden Ansprüche, insbesondere eine Vorrichtung nach Anspruch 7, **dadurch gekennzeichnet, dass** die Lichtquelle (17,18) Strahlung im für das menschliche Auge sichtbaren Wellenlängenbereich des Spektrums elektromagnetischer Wellen emittiert.

## Claims

1. Device for optical distance measurement, in particular a hand-held device, having a transmitting unit (12) with a light source (17, 18) for emitting optical measuring radiation (13, 20, 22) to a target object (15), and having a receiving unit (14), spaced apart from the optical axis (38) of the transmitting unit (12), with at least one optical detector (54) having a detection surface (66) for receiving optical radiation (16, 49, 50) returning from the target object (15), **characterized in that** the detection surface (66) of the detector (54) has an optical near zone element (68) whose optically active surface (72, 74) is elongated in the direction (61) of a beam displacement for diminishing target object distances (48) and expands at least partially in a direction orthogonal thereto.

2. Device according to Claim 1, **characterized in that** the light-sensitive surface (66, 70, 72, 74) of the detector (54) has an axis of symmetry which lies in the common plane (56) of the optical axes (38, 51) of transmitting unit and receiving unit.

3. Device according to Claim 1 or 2, **characterized in that** the extent of the light-sensitive surface (66, 70, 72, 74) of the detector (54) is at least so large that a measuring spot (58) of the returning radiation (16, 49) from a target object (15) at a large object distance is completely detected.

4. Device according to one of the preceding claims, **characterized in that** the extent of the light-sensitive surface (66, 70, 72, 74) of the detector (54) in a direction perpendicular to the optical axis (51) of the receiving unit (14) is at least so large that the measuring beam (50) returning from a target object (15) in the near zone still falls at least partially onto the light-sensitive surface (72, 74).

5. Device according to one of the preceding claims, **characterized in that** the active, light-sensitive surface (66, 70, 72, 74) of the detector (54) is formed by partial coverage of a larger, optically sensitive detector surface (82).

6. Device according to Claim 5, **characterized in that** the active, light-sensitive surface (66, 70, 72, 74) of the detector (54) is formed by partial application of an optically opaque layer (84) to the originally larger, optically sensitive detector surface (72).

7. Device according to one of the preceding claims, **characterized in that** the light source (17, 18) is a laser, in particular a laser diode (18).

8. Device according to one of the preceding claims, in particular a device according to Claim 7, **characterized in that** the light source (17, 18) emits radiation **in that** wavelength region of the spectrum of electromagnetic waves which is visible to the human eye.

## Revendications

1. Dispositif de masure optique de distance, notamment dispositif tenu à la main, présentant :
une unité d'émission (12) dotée d'une source de lumière (17, 18) qui émet un faisceau optique de mesure (13, 20, 22) sur un objet cible (15),
une unité de réception (14) située à distance de l'axe optique (38) de l'unité d'émission (12) et dotée d'au moins un détecteur optique (54) qui présente une surface de détection (66) recevant le rayonnement optique (16, 49, 50) renvoyé par l'objet cible (15), **caractérisé en ce que**
la surface de détection (66) du détecteur (54) présente un élément proche (68) dont la surface optiquement active (72, 74) est allongée dans la direction (61) d'un décalage du faisceau pour des distances (48) décroissantes par rapport à l'objet cible et s'évase au moins en partie dans la direction orthogonale à cette direction.

2. Dispositif selon la revendication 1, **caractérisé en ce que** la surface photosensible (66, 70, 72, 74) du détecteur (54) présente un axe de symétrie situé dans le plan commun (56) des axes optiques (38, 51) de l'unité d'émission et de l'unité de réception.

3. Dispositif selon les revendications 1 ou 2, **caractérisé en ce que** l'extension de la surface photosensible (66, 70, 72, 74) du détecteur (54) est assez grande pour qu'au moins une tache de mesure (58) formée par le rayon (16, 49) renvoyé par un objet cible (15) situé à grande distance soit détectée complètement.

4. Dispositif selon l'une des revendications précédentes, **caractérisé en ce que** l'extension de la surface photosensible (66, 70, 72, 74) du détecteur (54) dans la direction perpendiculaire à l'axe optique (51) de l'unité de réception (14) est assez grande pour qu'au moins le faisceau de mesure (50) renvoyé par un objet cible (15) situé à proximité aboutisse encore sur la surface photosensible (72, 74).

5. Dispositif selon l'une des revendications précédentes, **caractérisé en ce que** la surface photosensible active (66, 70, 72, 74) du détecteur (54) est formée par recouvrement partiel d'une plus grande surface optiquement sensible (82) du détecteur.

6. Dispositif selon la revendication 5, **caractérisé en ce que** la surface photosensible active (66, 70, 72, 74) du détecteur (54) est formée par application partielle d'une couche (84) optiquement opaque sur la plus grande surface optiquement sensible (72) du détecteur.

7. Dispositif selon l'une des revendications précédentes, **caractérisé en ce que** la source de lumière (17, 18) est un laser et en particulier une diode laser (18).

8. Dispositif selon l'une des revendications précédentes, en particulier dispositif selon la revendication 7, **caractérisé en ce que** la source de lumière (17, 18) émet un rayonnement dans la partie du spectre des ondes électromagnétiques qui est visible pour l'oeil humain.
